(19) Europäisches Patentamt
European Patent Office
Office européen des brevets

(11) Veröffentlichungsnummer: **0 132 818**
**B1**

(12) # EUROPÄISCHE PATENTSCHRIFT

(45) Veröffentlichungstag der Patentschrift: **30.12.86**

(21) Anmeldenummer: **84108657.2**

(22) Anmeldetag: **21.07.84**

(51) Int. Cl.⁴: **C 09 B 67/22**, C 09 D 11/02, C 08 J 3/20, C 09 B 57/04

(54) **Farbstarke Isoindolinpigmente, deren Herstellung und Verwendung.**

(30) Priorität: **30.07.83 DE 3327563**
**30.07.83 DE 3327564**

(43) Veröffentlichungstag der Anmeldung: **13.02.85 Patentblatt 85/07**

(45) Bekanntmachung des Hinweises auf die Patenterteilung: **30.12.86 Patentblatt 86/52**

(84) Benannte Vertragsstaaten: **CH DE FR GB IT LI**

(56) Entgegenhaltungen:
**EP-A- 0 035 174**
**FR-A- 2 135 259**
**FR-A- 2 355 886**
**FR-A- 2 414 066**
**GB-A- 1 187 667**

(73) Patentinhaber: **BASF Aktiengesellschaft**
**Carl-Bosch-Strasse 38**
**D-6700 Ludwigshafen (DE)**

(72) Erfinder: **Lotsch, Wolfgang, Dr.**
**Stettiner Strasse 32**
**D-6711 Beindersheim (DE)**
Erfinder: **Henning, Georg, Dr.**
**Thorwaldsenstrasse 3**
**D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 132 818 B1

**Beschreibung**

Die Erfindung betrifft farbstarke Isoindolinpigmente, deren Herstellung und deren Verwendung. Pigmentformen der Isoindolinverbindungen der Formel

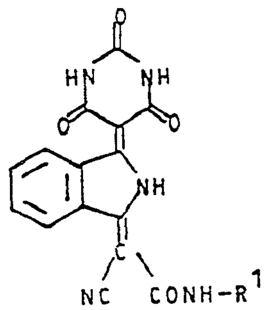

(III)

in der $R^1$ Wasserstoff oder Methyl ist, und deren Herstellung sind aus den DE-A-16 70 748, 27 57 982 und 28 00 815 bekannt. Es sind grünstichige Gelbpigmente, die sich je nach den Herstellungsbedingungen durch hohe Farbstärke und geringes Deckvermögen oder durch geringe Farbstärke und hohes Deckvermögen auszeichnen. Sie eignen sich aufgrund ihrer Unlöslichkeit hervorragend zum Einfärben thermoplastischer Kunststoffe und Einbrennlacke. Wegen ihrer hohen Lichtechtheit können sie besonders vorteilhaft für den Verpackungsdruck eingesetzt werden. Als vollwertige Alternative zu Diarylidpigmenten vom Typ C.I. Pigment Yellow 12 und 13 kommen jedoch sämtliche bekannten Pigmentformen von (III) nicht in Betracht, weil die Pigmente III mit $R^1$ Wasserstoff vor allem bezüglich der Farbstärke und die Pigmente III mit $R^1$ Methyl vor allem bezüglich der Lasur nicht das in der Praxis geforderte Niveau erreichen.

Weiterhin sind Pigmentformen der Isoindolinverbindung der Formel

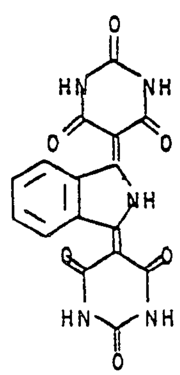

(V)

und deren Herstellung aus den DE-A-20 41 999, 26 28 409 und 28 00 815 und der EP-A 38 548 bekannt. Es sind wertvolle neutrale bis stark rotstichige Gelbpigmente, die je nach den Herstellungsbedingungen hohe Farbstärke und geringes Deckvermögen bis geringe Farbstärke und hohes Deckvermögen aufweisen.

Die farbschwächeren, deckenden Pigmentformen von (V) zeigen gute Wetterechtheiten in Lacken und eignen sich hervorragend als Alternative zu schwermetallhaltigen anorganischen Pigmenten. Die farbstarken und weniger deckenden Pigmentformen von (V) eignen sich hervorragend zum Einfärben von thermoplastischen Kunststoffen. Für die Verwendung der bekannten Pigmentformen von (V) als Druckfarbenpigmente als Alternative zu den sehr farbstarken und lasierenden Diarylidpigmenten vom Typ C.I. Pigment Yellow 12 und 13 und vor allem 83 genügt weder die Farbstärke noch die Lasur den Anforderungen in der Praxis. Für eine Verwendung auf dem Sektor höherwertiger Lacke reicht die Wetterechtheit der bekannten farbstarken Pigmentformen von (V) nicht aus.

Aufgabe der vorliegenden Erfindung war es, von (III) und (V) im Vergleich zum Stand der Technik in den Gebrauchseigenschaften verbesserte Pigmentformen bereitzustellen.

Es wurde nun gefunden, daß farbstarke Isoindolinpigmente vorliegen, wenn diese

(a) eine Verbindung der Formel

(Siehe Formel Seite 3 f.)

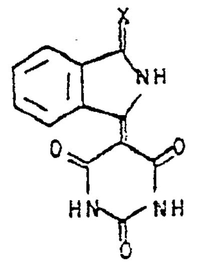

(I)

in der

X für

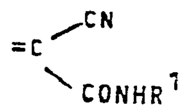 oder 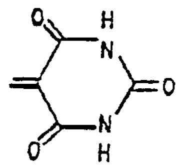 und

$R^1$ für Wasserstoff oder Methyl stehen, und

(b) 2 bis 50 Gew.%, bezogen auf (a), mindestens einer Isoindolinverbindung der Formel

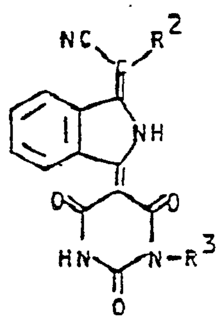

(II)

in der

$R^2$ für —CN, —$CONH_2$, N—$C_1$- bis $C_4$-Alkylcarbamoyl, N-Phenylcarbamoyl, 2-Chinazolonyl, 2-Chinoxazolonyl oder 2-Benzimidazolyl,

$R^3$ für Wasserstoff, $C_1$- bis $C_4$-Alkyl oder für gegebenenfalls durch Chlor, Brom, Methyl, Ethyl, Methoxy oder Ethoxy substituiertes Phenyl und

der Phenylrest im Phenylcarbamoyl und/oder die für $R^2$ genannten heterocyclischen Reste gegebenenfalls durch Chlor, Fluor, Brom, Carbamoyl, N—$C_1$- bis $C_4$-Alkylcarbamoyl, N-Phenylcarbamoyl, $C_1$- bis $C_4$-Alkyl, $C_1$- bis $C_4$-Alkoxy, Benzoylamino, $C_1$- bis $C_4$-Alkanoylamino, $C_1$- bis $C_4$-Alkoxycarbonyl oder Phenoxycarbonyl substituiert sind und wobei, wenn in der Komponente (a)

X 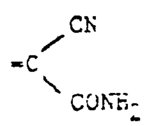

oder

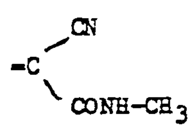

ist, $R^3$ nicht Wasserstoff sein darf.

enthalten und die Pigmente entweder durch trockenes Mahlen eines Gemisches aus (I) und (II) bis die Primärteilchen ≤ 0,2 μm sind und anschließendem Erwärmen des feinteiligen, agglomerierten Mahlgutes in einer organischen Flüssigkeit und Wasser oder durch Synthese von (I) in Gegenwart von feinteiligem (II) in wäßrigem Medium oder durch Erwärmen einer Mischung aus feinteiligen Pigmenten (I) und (II) in wäßrigem Medium, gegebenenfalls nach vorausgegangener Einwirkung von Scherkräften, erhalten werden.

Die neuen Pigmentformen der vorliegenden Erfindung zeigen im Vergleich zu den Pigmenten des Standes der Technik eine deutlich überlegene Farbstärke und überlegenes bis hohes Deckvermögen, in einigen Fällen zeigen die neuen Pigmentformen hohe Farbstärke und deutlich überlegene Lasur. Wendet man die erfindungsgemäß anzuwendenden Maßnahmen auf die reinen Isoindolinverbindungen der

Formeln III bzw. V an, dann erhält man farbschwache und deckende Pigmentformen. Letztere bieten gegenüber den Pigmentformen des Standes der Technik keine Vorteile.

Der Gehalt an (b) kann in weitem Bereich variiert werden und kann zwischen 2 und 50 Gew.%, bezogen auf (a), liegen. Aus coloristischen und wirtschaftlichen Gründen liegt der Anteil an (b) jedoch vorzugsweise bei 5 bis 20 Gew.%, insbesondere bei 10 bis 20 Gew.%, bezogen auf (I).

Die Pigmente der Formel II sind bekannt (DE-A-16 70 748, 27 27 982, 28 14 526, 29 14 086 und 30 07 299).

Für (a) kommen Isoindolinverbindungen der Formel I in Betracht, in der X ein nicht substituierter Barbitursäurerest oder ein Rest der Formel

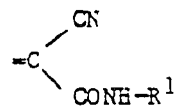

ist, in der $R^1$ für Wasserstoff oder Methyl steht.

Als Komponenten kommen für (b) Isoindolinverbindungen der Formel II in Betracht, in der $R^2$ —CN, —CONH2, N—$C_1$- bis $C_4$-Alkylcarbamoyl, N-Phenylcarbamoyl, 2-Chinazolonyl, 2-Chinoxazolonyl oder 2-Benzimidazolyl und $R^3$ Wasserstoff, $C_1$- bis $C_4$-Alkyl oder gegebenenfalls substituiertes Phenyl ; dabei darf $R^3$ nicht Wasserstoff sein, wenn in der Komponente (a)

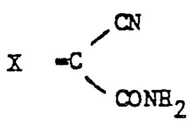

oder

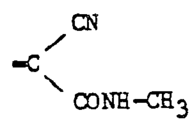

ist. Dabei können der Phenylrest im Phenylcarbamoyl und/oder die genannten heterocyclischen Reste noch weiter substituiert sein.

Für die Komponenten (a) sind zu nennen :

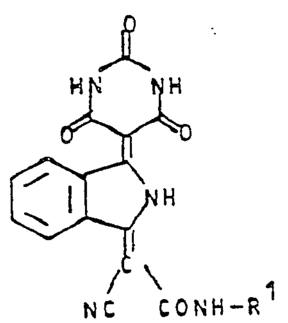 (III) und 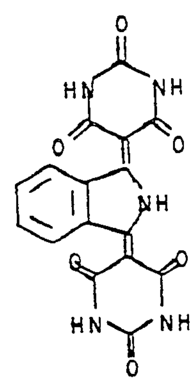 (V)

worin $R^1$ die vorstehend angegebene Bedeutung hat.

Als Komponenten (b), von denen mindestens eine in den Pigmenten gemäß der Erfindung enthalten sein muß, kommen z. B. in Betracht

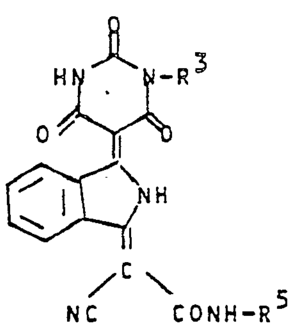 (IV) und 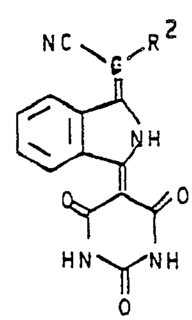 (VI)

worin $R^5$ für Wasserstoff oder $C_1$- bis $C_4$-Alkyl stehen und $R^2$ und $R^3$ die vorstehend angegebene Bedeutung haben.

Als $C_1$- bis $C_4$-Alkyl im N-Alkylcarbamoyl kommt z. B. im einzelnen in Betracht :

$C_1$- bis $C_4$-Alkyl : n-Butyl, Isobutyl, n-Propyl, Isopropyl, Ethyl und Methyl ; als gegebenenfalls substituiertes Phenyl im Phenylcarbamoyl, z. B. Phenyl, 2-, 3- und 4-Tolyl, 4-Bromphenyl, 3-Fluorphenyl, 2-, 3- oder 4-Chlorphenyl, 2-, 3- oder 4-Methoxyphenyl, 2,4-Dimethylphenyl, 3-Chlor-4-methylphenyl, 2-Carbomethoxyphenyl, 2-Carbamoylphenyl, 4-Acetylaminophenyl und 4-Benzoylaminophenyl.

Für $R^2$ sind weiterhin —CN, 2-Chinazolonyl, 2-Chinoxazolonyl und 2-Benzimidazolyl zu nennen, wobei die heterocyclischen Gruppen durch die oben genannten Reste substituiert sein können. Vorzugsweise sind diese Heterocyclen jedoch nicht weiter substituiert.

Bevorzugt sind Isoindolinpigmente, die als (a) eine Isoindolinverbindung der Formel (III), in der $R^1$ für Wasserstoff oder Methyl steht, und als (b) mindestens eine Isoindolinverbindung der Formel (IV) enthalten, in der $R^3$ für Wasserstoff-, $C_1$- bis $C_4$-Alkyl oder für gegebenenfalls durch Chlor, Brom, Methyl, Ethyl, Methoxy oder Ethoxy substituiertes Phenyl und $R^5$ für Wasserstoff oder $C_1$- bis $C_4$-Alkyl stehen, wobei wenn $R^1$ Wasserstoff ist, $R^3$ oder $R^5$ nicht Wasserstoff sein darf oder, wenn $R^1$ Methyl ist, $R^3$ nicht Wasserstoff sein darf.

Von diesen Pigmenten sind solche hervorzuheben, bei denen $R^1$ in (a) Wasserstoff oder Methyl (Formel III) und in (b) $R^3$ Methyl, Ethyl oder Phenyl und $R^5$ Methyl oder Ethyl sind (Formel IV). Dabei kann einer der Reste $R^3$ oder $R^5$ auch Wasserstoff sein. Für den Fall, daß $R^1$ Methyl ist, darf $R^3$ nicht Wasserstoff sein.

Besonders hervorzuheben sind von den aus (III) und (IV) bestehenden Isoindolinpigmenten solche, bei denen in (III) $R^1$ für Wasserstoff und in (IV) einer der Reste $R^3$ oder $R^5$ für Wasserstoff und der andere für Ethyl oder vorzugsweise Methyl stehen, oder solche, bei denen in (III) $R^1$ für Methyl, in (IV) $R^3$ für Ethyl, Phenyl oder vorzugsweise Methyl und $R^5$ für Wasserstoff stehen.

Bei den Pigmenten, die aus 80 bis 95, insbesondere aus 90 Gew.% (III) mit $R^1$ = H, als (a) und 20 bis 5, insbesondere 10 Gew.% (IV) mit $R^3 = —CH_3$ und $R^5$ = H als (b) erhalten werden, wurde gefunden, daß diese ein von den Ausgangsstoffen verschiedenes Röntgenbeugungsdiagramm aufweisen. Das Beugungsdiagramm entspricht praktisch dem der Verbindung (III) mit $R^1 = —CH_3$.

Ein von den Ausgangsstoffen (a) und (b) verschiedenes Röntgenbeugungsdiagramm zeigen auch Pigmente, die aus 90 bis 50, insbesondere 60 bis 50 Gew.% (III) mit $R^1 = —CH_3$ als (a) und 10 bis 50, insbesondere 40 bis 50 Gew.% (IV) mit $R^3 = —CH_3$ und $R^5$ = —H erhalten werden. Das Beugungsdiagramm entspricht praktisch dem der Verbindung (III) mit $R^1$ = H.

Weiter sind Isoindolinpigmente bevorzugt, die als (a) eine Isoindolinverbindung der Formel V und als (b) mindestens eine Isoindolinverbindung der Formel VI enthalten, worin $R^2$ für —CN, —$CONH_2$, N—$C_1$- bis $C_4$-Alkylcarbamoyl, N-Phenylcarbamoyl, 2-Chinazolonyl, 2-Chinoxazolonyl oder 2-Benzimidazolyl und wobei der Phenylrest im Phenylcarbamoyl und/oder die für $R^2$ genannten heterocyclischen Reste gegebenenfalls durch Fluor, Chlor, Brom, Carbamoyl, N—$C_1$- bis $C_4$-Alkylcarbamoyl, N-Phenylcarbamoyl, $C_1$- bis $C_4$-Alkyl, $C_1$- bis $C_4$-Alkoxy, Benzoylamino, $C_1$- bis $C_4$-Alkanoylamino, $C_1$- bis $C_4$-Alkoxycarbonyl oder Phenoxycarbonyl substituiert sind. Vorzugsweise sind die heterocyclischen Reste nicht substituiert.

Von den letztgenannten Pigmenten aus (V) und (VI) sind solche hervorzuheben, bei denen in (VI) $R^2$ für —$CONH_2$ N—$C_1$- bis $C_4$-Alkylcarbamoyl für gegebenenfalls durch Fluor, Chlor, Brom, Methyl, Ethyl, Ethoxy, Methoxy, Carbomethoxy, Acetylamino, Carbamoyl oder Benzoylamino substituiertes N-Phenylcarbamoyl oder 2-Chinazolyl stehen.

Besonders hervorzuheben sind von den letztgenannten Isoindolinpigmenten aus (V) und (VI) solche, bei denen in (VI) $R^2$ für gegebenenfalls durch Fluor, Chlor, Brom, Methyl und/oder Methoxy substituiertes N-Phenylcarbamoyl, insbesondere für Carbamoyl, N-Methylcarbamoyl, N-Phenylcarbamoyl oder für durch Chlor und/oder Methyl substituiertes N-Phenylcarbamoyl steht.

Der Anteil von (b) beträgt, bezogen auf (a), 2 bis 50 Gew.%. Pigmente mit maximalen Eigenschaften, wie Farbstärke und Echtheiten liegen vor, wenn diese 5 bis 15 Gew.% (b), bezogen auf (a), enthalten.

Die neuen farbstarken Isoindolinpigmente (Pigmentformen) können durch gemeinsames Mahlen von (a) und (b) und anschließender Wärmebehandlung des Mahlgutes in einer organischen Flüssigkeit oder in einem Gemisch aus organischer Flüssigkeit und Wasser erhalten.

Das Gemisch aus (a) und (b) wird im trockenen Zustand gemahlen, bis die Primärteilchengröße unterhalb 0,2 $\mu m$, vorzugsweise von $\leq 0,1$ $\mu m$, liegt. Das Mahlgut liegt in Form von 2 bis > 200 $\mu m$ großen Agglomeraten vor, die aus den Primärteilchen aufgebaut sind.

Das Mahlen kann auch in Gegenwart von festen Mahlhilfsmitteln, wie anorganischen oder organischen Salzen, z. B. Steinsalz, Natriumsulfat, Calciumchlorid, Kaliumchlorid, Natriumacetat, Natriumbenzoat und Alkalimetallsalzen der Phthalsäure erfolgen. Vorzugsweise wird jedoch in Abwesenheit von Mahlhilfsmitteln gemahlen.

Das Mahlen kann in üblichen auf dem Pigmentgebiet zum Feinmahlen verwendeten Zerkleinerungsapparaten erfolgen. Bevorzugt sind für eine technische Durchführung Schwingmühlen und Kugelmühlen ; für kleine Ansätze kommen auch Planetenkugelmühlen in Betracht.

Beim Mahlen erhält man ein grüngelbes bis gelbes Mahlgut, das aus 2 bis > 200 $\mu m$ großen aus den Primärteilchen aufgebauten Agglomeraten besteht. Im Röntgenspektrum des Mahlgutes sind die im

Spektrum der Ausgangspigmente I und II stark ausgeprägten Reflexe verschmiert und die Halbwertsbreiten der Reflexbanden in der Regel verdoppelt.

Das erhaltene Mahlgut wird dann in einer organischen Flüssigkeit oder einem Gemisch aus organischer Flüssigkeit und Wasser einer Temperaturbehandlung unterzogen.

Als organische Flüssigkeiten kommen aliphatische und cycloaliphatische Alkohole, Ester, aliphatische Carbonsäuren, aliphatische Carbonsäureamide, Lactame, Ether, Ketone, Phenole oder Gemische davon in Betracht.

Vorteilhafterweise verwendet man Phenole oder Carbonsäureamide von $C_1$- bis $C_4$-Alkansäuren, insbesondere deren Bis-N,N-$C_1$- bis $C_6$-alkylamide wie N,N-Dimethylformamid, N,N-Diethylformamid, N,N-Dipropylformamid, N,N-Dimethylacetamid, N,N-Diethylacetamid, N,N-Dipropylacetamid, N,N-Dimethylpropionamid, N,N-Diethylpropionamid und N-Methylpyrrolidon als Lactam oder Gemische davon.

Dabei können auch Gemische dieser Amide mit Wasser verwendet werden.

Als organische Flüssigkeiten haben sich die Phenole als besonders vorteilhaft erwiesen.

Als Phenole sind außer dem nicht weiter substituierten Phenol, die Alkylphenole und die Chlorphenole wie die Kresole, die Xylenole und die Chlorphenole zu nennen.

Als organische Flüssigkeit ist Phenol besonders bevorzugt.

Die Menge an Flüssigkeit ist nicht kritisch, wenn das Gemisch durchmischbar ist. Aus wirtschaftlichen Gründen wird man die Menge an organischer Flüssigkeit so gering wie möglich halten. In der Regel werden für die Temperaturbehandlung die 6- bis 20-, vorzugsweise die 8- bis 15-fache Gewichtsmenge, bezogen auf das Mahlgut, an der organischen Flüssigkeit angewendet.

Das Mahlgut wird in der organischen Flüssigkeit zweckmäßigerweise auf Temperaturen von 50 bis 200 °C erwärmt und bei diesen Temperaturen gehalten. Die Formierung ist nach 1 bis 20 Stunden beendet.

Besonders farbstarke und in einigen Fällen auch lasierende Pigmente auf der Basis von (III) erhält man durch 5- bis 10-stündiges Erwärmen auf Temperaturen von 80 bis 120 °C.

Besonders farbstarke und deckende Pigmente auf der Basis von (V) erhält man durch 5- bis 15-stündiges Erwärmen auf 150 bis 200 °C.

Die neuen Pigmentformen werden in üblicher Weise aus dem Behandlungsgemisch isoliert, z. B. durch Filtrieren und Waschen.

Im Falle von Flüssigkeiten, die oberhalb Raumtemperatur fest sind, wird das Behandlungsgemisch vorteilhafterweise mit einem mit Wasser mischbaren Lösungsmittel wie Methanol, Ethanol, Isopropanol oder Aceton verdünnt und dann das Pigment isoliert.

Lasierende und farbstarke Isoindolinpigmente auf der Basis von (V) erhält man, wenn man entweder die Synthese von (V) in Gegenwart von feinteiligem (VI) in Wasser durchführt oder ein Gemisch aus feinteiligen Pigmenten (V) und (VI) in wäßrigem Medium, gegebenenfalls nach vorausgegangener Einwirkung von Scherkräften, erwärmt.

Von den lasierenden und farbstarken Pigmenten auf der Basis von (V), sind aus coloristischen und anwendungstechnischen Gründen solche bevorzugt, die als (b) Isoindolinverbindungen der Formel VI enthalten, in der $R^2$ für $—CONH_2$, N—$C_1$- bis $C_4$-Alkylcarbamoyl, gegebenenfalls durch Chlor substituiertes N-Phenylcarbamoyl oder 2-Chinazolyl steht. Besonders bevorzugt sind Pigmentformen von (V), die als (b) Verbindungen (VI) enthalten, in der $R^2$ für $—CONH_2$, $—CONH—CH_3$, N-(4-Chlorphenyl)-carbamoyl, N-(3-Chlorphenyl)-carbamoyl oder 2-Chinazolyl steht.

Diese farbstarken, lasierenden Pigmentformen enthalten, bezogen auf (V) (= a), 10 bis 20 Gew.% an (VI) als (b).

Die neuen lasierenden, farbstarken Pigmentformen auf der Basis von (V) mit (VI) als (b) können nach verschiedenen Varianten hergestellt werden :

1) durch Synthese von (V) in Gegenwart von feinteiligem (VI) und Erwärmen auf Temperaturen ≤ 100 °C, z. B. entsprechend den Angaben in der DE-A-26 28 409, Beispiel 1 ;

2) durch Synthese von (V) in Gegenwart von feinteiligem (VI) und Erhitzen auf Temperaturen oberhalb 100 °C, z. B. entsprechend DE-A-26 28 409, Beispiel 5 ;

3) durch Synthese wie unter 1), Isolieren des Syntheseproduktes und anschließender Temperaturbehandlung, z. B. nach EP-A 38 548, Beispiele 2 und 5 ;

4) durch Mischen der einzeln hergestellten feinteiligen Pigmente (V) und (VI) in Form der wasserfeuchten Filterkuchen und Temperaturbehandlung des Gemisches, z. B. entsprechend der EP-A 38 548 ;

5) durch Einwirken von Scherkräften auf eine Mischung der Filterkuchen von (V) und (VI) und anschließender Temperaturbehandlung, z. B. entsprechend der DE-A-28 00 815.

Je nach den angewendeten Bedingungen erhält man Pigmentformen mit unterschiedlichen coloristischen und anwendungstechnischen Eigenschaften.

So erhält man nach der Variante 1) und vor allem nach der Variante 5) Pigmentformen, die extreme Farbstärke und extreme Lasur aufweisen. Diese Pigmentformen sind hervorragend zum Pigmentieren von Druckfarben geeignet.

Pigmentformen, die eine hohe Farbstärke bei hoher Lasur und gleichzeitig guter Wetterechtheit aufweisen, erhält man nach den Varianten 2) und 3) und insbesondere nach der Varante 4). Diese

Pigmentformen sind vor allem für das Pigmentieren von Lacken und von Kunststoffen in der Masse geeignet.

Die Synthese von (V) in Gegenwart von feinteiligem (VI) erfolgt in bekannter Weise entsprechend der DE-OS 26 28 409, wobei je nach der beabsichtigten Verwendung, das Verfahrensprodukt bei Temperaturen von 70 bis 100 °C (Variante 1) oder bei Temperaturen oberhalb von 100 °C, vorteilhafterweise bei 120 bis 150 °C (Variante 2) nachbehandelt wird oder das Verfahrensprodukt zunächst isoliert und nach dem Anrühren mit Wasser der Temperaturbehandlung unterzogen wird (Variante 3).

Bei den Varianten 4) und 5) wird von feinteiligen Pigmenten (V) und (VI) ausgegangen. Die Wärmebehandlung kann bei Temperaturen von 70 bis 150 °C erfolgen, je nachdem ob das Pigment höchste Farbstärke und extreme Lasur oder ein farbstarkes, lasierendes Pigment mit hoher Wetterechtheit hergestellt werden soll. Die Herstellung der Pigmente gemäß der vorliegenden Erfindung kann in Gegenwart oder in Abwesenheit von oberflächenaktiven Mitteln erfolgen.

Die anwendungstechnischen und/oder coloristischen Eigenschaften der neuen Pigmentformen können durch Auswahl geeigneter Isoindolinverbindungen (VI) zusätzlich beeinflußt werden. So erhält man nach der Variante 1) ein brillantes, grünstichig gelbes, farbstarkes Pigment mit hoher Lasur, das für Druckfarben geeignet ist, mit Verbindungen der Formel (VI), in der $R^2$ für Carbamoyl oder N—$C_1$-$C_4$-Alkylcarbamoyl, vorzugsweise für N-Methylcarbamoyl steht.

Farbstarke und lasierende rotstichig gelbe bis gelbstichig rote Pigmente mit hoher Wetterechtheit werden mit Isoindolinverbindungen der Formel (VI) erhalten, in der $R^2$ für im Phenylkern substituiertes N-Phenylcarbamoyl oder für 2-Chinazolonyl steht. Dabei ist Chlor als Substituent im Phenylkern bevorzugt. Besonders bevorzugt ist in diesem Fall $R^2$ = 2-Chinazolonyl.

Die folgenden Beispiele sollen die Erfindung zusätzlich erläutern. Die im folgenden angegebenen Teile sind Gewichtsteile.

## Beispiel 1

32,5 Teile (V) (hergestellt entsprechend DE-A-26 28 409, Beispiel 1) werden in Form des wäßrigen Preßkuchens mit 3 Teilen Isoindolin der Formel (VI) mit R = 2-Chinazolonyl in Form einer wäßrigen Suspension (hergestellt durch Kondensation von 1,3-Diiminoisoindolin mit 2-Cyanmethylchinazolon (1 : 1 Mol) in Methanol und Umsetzen des isolierten und getrockneten 1 : 1 Kondensationsproduktes mit Barbitursäure in Eisessig bei Siedetemperatur; das trockene Pigment wurde in 50 Teilen Wasser auf einer Schüttelmühle mit Glaskugeln 2 Stunden dispergiert) und 400 Teilen Wasser versetzt und das Gemisch unter kräftigem Rühren auf 130 °C erwärmt und 7 Stunden bei dieser Temperatur gehalten. Nach dem Abkühlen auf 80 °C wird filtriert und mit heißem Wasser gewaschen und getrocknet. Man erhält 32 Teile eines Pigmentes, das in Lacken eingefärbt, sehr farbstarke Orangefärbungen mit guter Wetterechtheit ergibt.

Im Vergleich zu der Pigmentform von (V), die unter den gleichen Bedingungen, jedoch ohne den Zusatz von (VI) hergestellt wurde, ist die erfindungsgemäße Pigmentform viel farbstärker und viel lasierender bei vergleichbarer Wetterechtheit.

## Beispiel 2

Man verfährt wie in Beispiel 1, verwendet jedoch anstelle von 3 Teilen nur 1,5 Teile der angegebenen Isoindolinverbindung (VI). Man erhält 31 Teile eines Pigmentes, das in Lacken stark rotstichig gelbe Färbungen mit sehr hoher Farbstärke und guter Wetterechtheit ergibt.

## Beispiel 3

Man verfährt wie in Beispiel 1, erhitzt jedoch die wäßrige Suspension 14 Stunden auf 130 °C. Man erhält 31 Teile Pigment, das in Lacken im Vergleich zu der unter sonst gleichen Bedingungen jedoch in Abwesenheit von (VI) hergestellten reinen Pigmentform von (V) vielfach farbstärkere Orangefärbungen mit guter Wetterechtheit ergibt.

## Beispiele 4 bis 24

Man verfährt wie in Beispiel 1, verwendet jedoch Isoindolinverbindung (VI) (3 Teile) mit der in der Tabelle angegebenen Bedeutung für $R^2$. Es resultieren farbstarke Pigmente, die in Lacken gut bis sehr gut wetterechte Färbungen in den angegebenen Farbtönen liefern.

(Siehe Tabelle Seite 8 ff.)

| Beispiel | $R^2$ | Farbton |
|---|---|---|
| 4 | 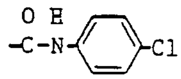 | orange |
| 5 | 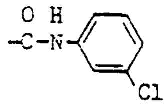 | gelb |
| 6 | 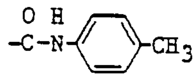 | orange |
| 7 | 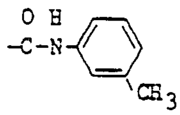 | orange |
| 8 | 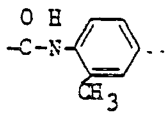 | gelb |
| 9 | 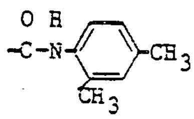 | braun-orange |
| 10 | 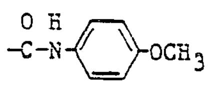 | braun-orange |
| 11 | 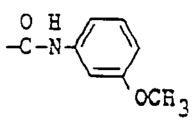 | orange |
| 12 | 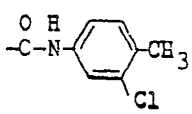 | orange |
| 13 | 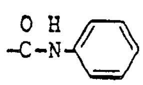 | gelb |
| 14 | 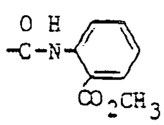 | gelb |
| 15 | 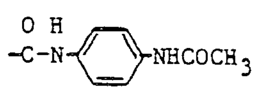 | braun-orange |
| 16 | 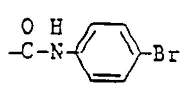 | orange |
| 17 | 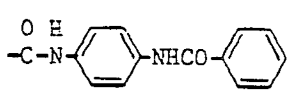 | braun-orange |

(Fortsetzung)

| Beispiel | $R^2$ | Farbton |
|---|---|---|
| 18 | 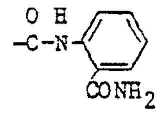 | gelb |
| 19 | 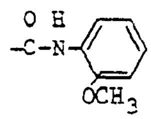 | braun-orange |
| 20 | 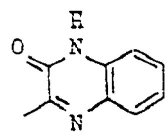 | braun |
| 21 | $-CN$ | gelb |
| 22 | $-CONHC_2H_5$ | gelb |
| 23 | $-CONHCH_3$ | gelb |
| 24 | $-CONH_2$ | gelb |

Beispiel 25

12,8 Teile o-Phthalodinitril werden in 100 Teilen Ethylenglykol suspendiert und in 3 Stunden bei 50 °C 3 Teile Ammoniak gasförmig eingeleitet. Die resultierende Lösung des 1-Amino-3-imino-isoindolenins wird in einer halben Stunde bei Raumtemperatur zu einer kräftig gerührten Suspension gegeben, die 27 Teile Barbitursäure in einer Lösung aus 22 Teilen des Natriumsalzes einer $C_3$-/$C_4$-Alkylnaphthalinsulfonsäure, 22 Teilen Ameisensäure und 3 Teilen des Pigmentes der Formel (VI) mit R = N-Methylcarbamoyl (das vorher in 50 Teilen Wasser auf einer Schüttelmühle mit Glaskugeln 2 Stunden dispergiert worden war) in 240 Teilen Wasser enthält. Man rührt eine Stunde nach und erhitzt dann 4 Stunden zum Sieden. Dann wird heiß filtriert, das Filtergut mit warmem Wasser neutral und hilfsmittelfrei gewaschen. Man kann auch das Filtergut wieder in Wasser eintragen, die Suspension kurz aufkochen und nochmals heiß filtrieren, um die überschüssige Säure und das Hilfsmittel schnell und quantitativ aus dem Pigment zu entfernen. Das Filtergut wird dann mit Methanol gewaschen und getrocknet.

Man erhält 36 Teile eines Gelbpigmentes, welches brillante, im Vergleich zu dem nach der DE-A-26 28 409, Beispiel 1, erhältlichen Pigment wesentlich grünere Färbungen ergibt, die sich in Druckfarben durch eine wesentlich höhere Lasur auszeichnen.

Beispiel 26

Man verfährt wie in Beispiel 25, verwendet jedoch 10 g des in Wasser gut dispergierten Pigmentes der Formel (VI) mit R = N-Methylcarbamoyl. Man erhält 42 Teile eines farbstarken Gelbpigmentes, welches im Vergleich zu dem in Abwesenheit von (VI) hergestellten reinen Pigment (V) viel grünere, reinere und lasierendere Färbungen in Druckfarben ergibt.

Beispiel 27

Man verfährt wie in Beispiel 25, verwendet jedoch 3 Teile des Pigmentes der Formel (VI) mit R = Carbamoyl. Man erhält 36 Teile eines Gelbpigmentes, welches mit dem Pigment des Beispiels 25 vergleichbare Eigenschaften hat.

Beispiel 28

Man verfährt wie in Beispiel 25, setzt jedoch das Pigment (b) der Formel (VI) mit R = N-Methylcarbamoyl erst nach dem einstündigen Nachrühren, jedoch vor dem Erwärmen auf Siedetemperatur zu. Man erhält 36 Teile eines Gelbpigmentes, das sich im Vergleich zu dem in Abwesenheit von (VI) hergestellten reinen Pigment (V) durch höhere Farbstärke, durch einen grünen und reinen Farbton und eine höhere Lasur in Druckfarben, Lacken und Kunststoffen auszeichnet.

Beispiel 29

Man verfährt wie in Beispiel 25, verwendet jedoch als Pigment (b) 3 Teile des vorher in Wasser gut dispergierten Isoindolinfarbstoffs der Formel (VI) mit R = N-Phenylcarbamoyl. Man erhält 36 Teile eines farbstarken, rotstichigen Gelbpigmentes, das brillante, lasierende Druckfarben ergibt.

Beispiel 30

Man verfährt wie in der DE-A-28 00 815, Beispiel 3, verwendet jedoch als (a) 27 Teile des nach der DE-A-20 41 999, Beispiel 1 hergestellten Pigmentes (V) und als (b) 3 Teile des nach der DE-A-16 70 748, Beispiel 76 hergestellten Pigmentes (VI) mit R = Carbamoyl. Man erhält ein Pigment, das gegenüber dem Vergleich aus reinem (V) farbstärkere, grünere und lasierendere Färbungen gibt. Das neue Pigment eignet sich gut zum Einfärben von Druckfarben, Lacken und Kunststoffen.

Anwendungsbeispiel 1

Lack

10 Teile des nach Beispiel 1 erhaltenen Pigmentes und 95 Teile einer Einbrennlackmischung, die 70 % Kokosalkydharz (60 %ig in Xylol gelöst) und 30 % Melaminharz (ungefähr 55 %ig gelöst in Butanol/Xylol) enthält, werden in einem Attritor angerieben. Nach dem Auftragen und Einbrennen (30 Minuten bei 120 °C) werden gelbstichig rote Volltonlackierungen mit guter Licht- und Überspritzechtheit erhalten. Durch Zumischen von Titandioxid werden orangefarbene Weißaufhellungen erzielt.

Verwendet man die nach den Beispielen 2 bis 24 erhaltenen Pigmente, so werden Lackierungen in den angegebenen Farbtönen mit ähnlichen Eigenschaften erhalten.

Anwendungsbeispiel 2

Kunststoff

0,5 Teile des nach Beispiel 1 erhaltenen Farbstoffs werden auf 100 Teile Polystyrolgranulat (Standard-Marke) aufgetrommelt. Das angefärbte Granulat wird durch Extrudieren homogenisiert (190 bis 195 °C). Man erhält gelbstichig rote Extrudate, deren Färbung gute Lichtechtheit aufweist.

Verwendet man eine Mischung aus 0,5 Teilen Farbstoff und 1 Teil Titandioxid, so erhält man deckende, gelbstichig rote Färbungen.

Verwendet man die Pigmente, die nach den Beispielen 2 bis 30 erhalten werden, so erhält man gute lichtechte Färbungen in den angegebenen Farbtönen.

Anwendungsbeispiel 3

Druckfarbe

8 Teile des nach Beispiel 25 erhaltenen Pigmentes, 40 Teile eines mit Phenol/Formaldehyd modifizierten Kolophoniumharzes und 55 bis 65 Teile Toluol werden in einem Dispergierapparat innig vermischt. Man erhält eine gelbe Toluol-Tiefdruckfarbe. Die mit dieser Farbe erhaltenen Drucke weisen gute Lichtechtheit bei hoher Lasur auf. Bei Verwendung der nach den Beispielen 26, 27, 28 und 30 erhaltenen Pigmente werden ähnliche Ergebnisse erzielt.

Beispiel 31

a) 47,5 Teile Pigment der Formel (III) $R^1$ = H (hergestellt nach DE-B-27 57 982, Beispiel 3) und 2,5 Teile Pigment der Formel (IV) mit $R^5 = -CH_3$ und $R^3$ = H (hergestellt nach DE-B-29 14 086, Beispiel 1) werden in einer Planetenkugelmühle (Mahlkörper : 20 Achatkugeln von 1 cm und 20 Achatkugeln von 2 cm Durchmesser) 4 Stunden gemahlen.

b) Das stark verdichtete, grüngelbe Mahlgut, das aus Agglomeraten von Primärteilchen von $\leq 0,1\ \mu m$ besteht, wird in 500 Teile Phenol eingetragen, auf 110 °C erwärmt und 10 Stunden bei 110 °C gehalten. Nach dem Abkühlen auf 70 °C wird mit 100 Teilen Methanol verdünnt und das Pigment filtriert, mit Methanol gewaschen und getrocknet. Ausbeute : 47 Teile Pigment, das im Vergleich zu dem der DE-B-27 57 982, Beispiel 3, oder im Vergleich zu dem in gleicher Weise behandelten reinen Pigment (III) mit

$R^1 = H$ in Einbrennlacken viel farbstärkere und deckende Färbungen liefert.

Beispiel 32

Man verfährt wie in Beispiel 31 a) und b), verwendet jedoch 45 Teile der Verbindung der Formel (III) mit $R^1 = H$ und 5 Teile der Verbindung der Formel (IV) mit $R^5 = —CH_3$ und $R^3 = H$.

Ausbeute : 47 Teile Pigment, das im Vergleich zu dem der DE-B-2 757 982, Beispiel 3, oder im Vergleich zu dem in gleicher Weise behandelten reinen Pigment der Formel (III) in Einbrennlacken viel farbstärkere und deckendere Färbungen liefert.

Beispiel 33

Man verfährt wie in Beispiel 32, verwendet jedoch 45 Teile der Verbindung der Formel (III) mit $R^1 = H$ und als (b) 5 Teile der Verbindung (IV) mit $R^5 = H$ und $R^3 = —CH_3$. Das Mahlgut wird 2 Stunden bei 105 °C und 4 Stunden bei 110 °C gerührt.

Man erhält 47 Teile Pigment, das im Vergleich zu dem der DE-B-2 757 982, Beispiel 3, oder im Vergleich zu dem in gleicher Weise behandelten reinen Pigment (III) mit $R^1 = H$ in Einbrennlacken viel farbstärkere Färbungen liefert. Das erhaltene Pigment zeigt ein Röntgenbeugungsdiagramm, das von dem der Ausgangsverbindungen verschieden ist und das praktisch dem Beugungsdiagramm der Verbindung (III) mit $R^1 = —CH_3$ entspricht.

Beispiel 34

Man verfährt wie in Beispiel 33, verwendet jedoch 30 Teile der Verbindung (III) mit $R^1 = H$ und als (b) 20 Teile der Verbindung (IV) mit $R^5 = H$ und $R^3 = —CH_3$ und rührt das Mahlgut 2 Stunden bei 110 °C und 4 Stunden bei 115 °C.

Man erhält 46 Teile Pigment, das im Vergleich zu dem der DE-B-2 757 982, Beispiel 3, oder im Vergleich zu dem in gleicher Weise behandelten reinen Pigment (III) mit $R^1 = H$ in Einbrennlacken viel farbstärkere und lasierendere Färbungen liefert.

Beispiel 35

Man verfährt wie in Beispiel 32, verwendet jedoch 45 Teile der Verbindung (III) mit $R^1 = H$ und als (b) 5 Teile der Verbindung (IV) mit $R^5 = H$ und $R^3$ = Phenyl und rührt das Mahlgut 8 Stunden bei 105 °C.

Man erhält 47 Teile Pigment mit zu den Pigmenten der Beispiele 1 und 2 vergleichbaren Eigenschaften.

Beispiel 36

Man verfährt wie in Beispiel 31 a) und b), rührt jedoch das Mahlgut in 500 Teilen Dimethylformamid 10 Stunden bei 140 °C. Man erhält ein Pigment mit vergleichbaren Eigenschaften.

Beispiel 37

Man verfährt wie in Beispiel 34, verwendet jedoch als (a) 30 Teile Verbindung (III) mit $R^1 = —CH_3$ und als (b) 20 Teile der Verbindung (IV) mit $R^5 = H$ und $R^3 = —CH_3$ und rührt das Mahlgut 2 Stunden bei 105 °C und dann 4 Stunden bei 115 °C.

Man erhält 46 Teile Pigment, das im Vergleich zu dem Pigment der DE-B-2 914 086, Beispiel 1 oder im Vergleich zu dem in gleicher Weise behandelten Pigment (III) mit $R^1 = —CH_3$ im Einbrennlack und in Druckfarben wesentlich farbstärkere und besonders lasierende Färbungen liefert.

Das erhaltene Pigment weist ein von den Ausgangsverbindungen verschiedenes Röntgenbeugungsdiagramm auf. Das Beugungsdiagramm entspricht praktisch dem der Verbindung (III) mit $R^1 = H$.

Ein entsprechendes Pigment mit dem gleichen Beugungsdiagramm erhält man, wenn als (a) 25 Teile III mit $R^1 = —CH_3$ und als (b) 25 Teile IV mit $R^3 = CH_3$ und $R^5 = H$ verwendet werden.

Beispiel 38

a) 45 Teile Verbindung (V) (hergestellt nach DE-B-2 628 409, Beispiel 1) und 5 Teile Verbindung (VI) mit $R^2 = —CONHCH_3$ (hergestellt nach DE-B-2 914 086, Beispiel 1) werden in einer Planetenkugelmühle (Mahlkörper : 20 Achatkugeln von 1 cm und 20 Achatkugeln von 2 cm Durchmesser) 4 Stunden gemahlen.

b) Das stark verdichtete, gelbe Mahlgut, das aus Agglomeraten von Primärteilchen von $< 0,1$ µm besteht, wird in 500 Teile Phenol eingetragen, auf 170 °C erwärmt und 7 Stunden bei 170 °C gehalten. Nach dem Abkühlen auf 70 °C wird mit 100 Teilen Methanol verdünnt und das Pigment filtriert, mit

Methanol gewaschen und getrocknet. Ausbeute : 47 Teile Pigment, das im Vergleich zu dem der DE-B-2 628 409, Beispiel 1, oder im Vergleich zu dem in gleicher Weise behandelten reinen Pigment (V) in Einbrennlacken viel farbstärkere und deckendere Färbungen liefert.

Beispiel 39

Man verfährt wie in Beispiel 38 a) und b), verwendet jedoch 40 Teile der dort angegebenen Verbindung (V) und 10 Teile der Verbindung (VI) mit $R^2$ = $—CONH_2$.

Ausbeute : 47 Teile Pigment, das im Vergleich zu dem der DE-B-2 628 409, Beispiel 1 oder im Vergleich zu dem in gleicher Weise behandelten reinen Pigment (V) in Einbrennlacken viel farbstärkere und deckendere Färbungen liefert.

Beispiel 40

Man verfährt wie in Beispiel 38, verwendet jedoch 35 Teile der Verbindung (V) und als (b) 15 Teile der Verbindung (VI) mit $R^2$ = $—CONHCH_3$. Das Mahlgut wird 1 Stunde bei 110 °C und 6 Stunden bei 120 °C gerührt.

Man erhält 47 Teile Pigment, das im Vergleich zu dem der DE-B-2 628 409, Beispiel 1, oder im Vergleich zu dem in gleicher Weise behandelten reinen Pigment (V) in Einbrennlacken viel farbstärkere und deckendere Färbungen liefert.

Beispiel 41

Man verfährt wie in Beispiel 38, verwendet jedoch als (a) 45 Teile der Verbindung (V) und als (b) 5 Teile der Verbindung (VI) mit $R^2$ = —CONH— 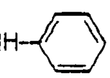 und rührt das Mahlgut 10 Stunden bei 170 °C.

Man erhält 46 Teile Pigment, das im Vergleich zu dem DE-B-2 628 409, Beispiel 1, oder im Vergleich zu dem in gleicher Weise behandelten reinen Pigment (V) in Einbrennlacken viel farbstärkere und deckendere Färbungen liefert.

Beispiele 42 bis 59

Man verfährt entsprechend Beispiel 41, verwendet jedoch als (b) je 5 Teile der Isoindolinverbindung der Formel VI, in der $R^2$ die in der Tabelle angegebene Bedeutung hat. Es resultieren Pigmente, die in Lacken sehr farbstarke und deckende rotstichiggelbe Färbungen liefern.

| Beispiel | $R^2$ |
|---|---|
| 42 | 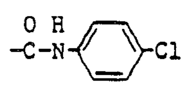 |
| 43 | 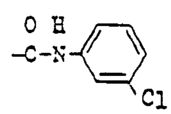 |
| 44 | 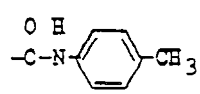 |
| 45 | 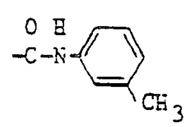 |
| 46 | 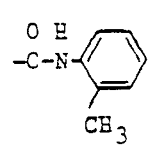 |

| Beispiel | $R^2$ |
|---|---|
| 47 | 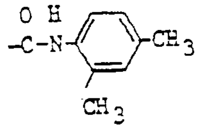 |
| 48 | 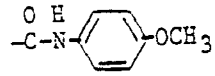 |
| 49 | 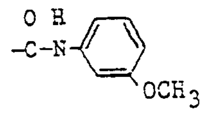 |
| 50 | 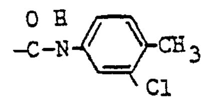 |
| 51 | 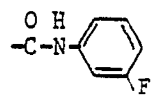 |
| 52 | 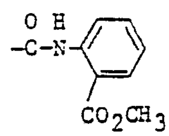 |
| 53 | 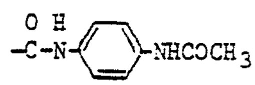 |
| 54 | 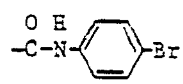 |
| 55 | 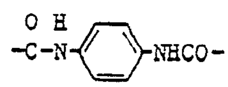 |
| 56 | 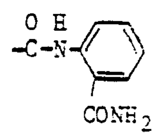 |
| 57 | 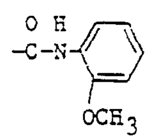 |
| 58 | 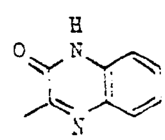 |
| 59 | 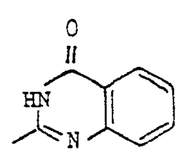 |

Anwendungsbeispiel 4

Lack

10 Teile des nach Beispiel 38 erhaltenen Pigmentes und 95 Teile Einbrennlackmischung, die 70 % Kokosalkydharz (60 %ig in Xylol gelöst) und 30 % Melaminharz (ungefähr 55 %ig gelöst in Butanol/Xylol) enthält, werden in einem Attritor angerieben. Nach dem Auftragen und einer Einbrennzeit von 30 Minuten bei 120 °C werden rotstichig gelbe Volltonlackierungen mit guter Licht- und Überspritzechtheit erhalten. Durch Zumischen von Titandioxid werden rotstichig gelbe Weißaufhellungen erzielt.

Verwendet man die nach den Beispielen 39 bis 59 erhaltenen Pigmente, so werden Lackierungen mit ähnlichen Eigenschaften erhalten.

Anwendungsbeispiel 5

Kunststoff

0,5 Teile des Pigmentes aus Beispiel 38 werden auf 100 Teile Polystyrolgranulat (Standard-Marke) aufgetrommelt. Das angefärbte Granulat wird durch Extrudieren homogenisiert (190 bis 195 °C). Man erhält rotstichig gelbe Extrudate, deren Färbung gute Lichtechtheit aufweist.

Verwendet man eine Mischung aus 0,5 Teilen Farbstoff und 1 Teil Titandioxid, so erhält man deckende, rotstichig gelbe Färbungen.

Verwendet man die nach den Beispielen 39 bis 59 erhaltenen Pigmente, so erhält man ebenfalls rotstichig gelbe Färbungen, welche gute Echtheiten aufweisen.

Anwendungsbeispiel 6

Druckfarbe

8 Teile des nach Beispiel 38 erhaltenen Pigmentes, 40 Teile eines mit Phenol/Formaldehyd modifizierten Collophoniumharzes und 55 bis 65 Teile Toluol werden in einem Dispergieraggregat innig vermischt. Man erhält eine gelbe Toluol -Tiefdruckfarbe. Die mit dieser Farbe erhaltenen Drucke weisen gute Lichtechtheiten auf. Ähnliche Ergebnisse werden erhalten, wenn anstelle des nach Beispiel 8 erhaltenen Pigmentes, die der Beispiele 39 bis 59 verwendet werden.

Anwendungsbeispiel 7

Lack

10 Teile des nach Beispiel 31 erhaltenen Pigmentes und 95 Teile Einbrennlackmischung, die 70 % Kokosalkydharz (60 %ig in Xylol gelöst) und 30 % Melaminharz (ungefähr 55 %ig gelöst in Butanol/Xylol) enthält, werden in einem Attritor angerieben. Nach dem Auftragen und einer Einbrennzeit von 30 Minuten bei 120 °C werden grünstichig gelbe Volltonlackierungen mit guter Licht- und Überspritzechtheit erhalten. Durch Zumischen von Titandioxid werden grünstichig gelbe Weißaufhellungen erzielt.

Verwendet man die nach den Beispielen 32 bis 37 erhaltenen Pigmente, so werden Lackierungen mit ähnlichen Eigenschaften erhalten.

Anwendungsbeispiel 8

Kunststoff

0,5 Teile des Pigmentes aus Beispiel 31 werden auf 100 Teile Polystyrolgranulat (Standard-Marke) aufgetrommelt. Das angefärbte Granulat wird durch Extrudieren homogenisiert (190 bis 195 °C). Man erhält grünstichig gelbe Extrudate, deren Färbung gute Lichtechtheit aufweist.

Verwendet man eine Mischung aus 0,5 Teilen Farbstoff und 1 Teil Titandioxid, so erhält man deckende, grünstichig gelbe Färbungen.

Verwendet man die nach den Beispielen 32 bis 37 erhaltenen Pigmente, so erhält man ebenfalls grünstichig gelbe Färbungen, welche gute Echtheiten aufweisen.

Anwendungsbeispiel 9

Druckfarbe

8 Teile des nach Beispiel 37 erhaltenen Pigmentes, 40 Teile eines mit Phenol/Formaldehyd modifizierten Collophoniumharzes und 55 bis 65 Teile Toluol werden in einem Dispergieraggregat innig

vermischt. Man erhält eine gelbe Toluol-Tiefdruckfarbe. Die mit dieser Farbe erhaltenen Drucke weisen bei hoher Lasur gute Lichtechtheiten auf. Ähnliche Ergebnisse werden erhalten, wenn anstelle des nach Beispiel 37 erhaltenen Pigmentes, die der Beispiele 31 bis 36 verwendet werden.

**Patentansprüche**

1. Farbstarke Isoindolinpigmente, enthaltend
(a) eine Verbindung der Formel

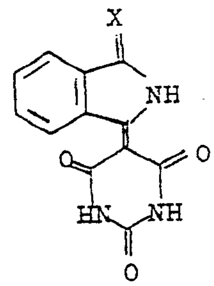

(I)

in der
X fur

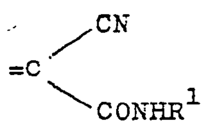 oder 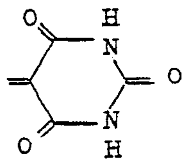 und

$R^1$ für Wasserstoff oder Methyl stehen, und
(b) 2 bis 50 Gew.%, bezogen auf (a), mindestens einer Isoindolinverbindung der Formel

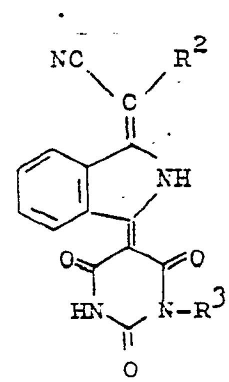

(II)

in der
$R^2$ für —CN, —$CONH_2$, N—$C_1$- bis $C_4$-Alkylcarbamoyl, N-Phenylcarbamoyl, 2-Chinazolonyl, 2-Chinoxazolonyl oder 2-Benzimidazolyl,
$R^3$ für Wasserstoff, $C_1$- bis $C_4$-Alkyl oder für gegebenenfalls durch Chlor, Brom, Methyl, Ethyl, Methoxy oder Ethoxy substituiertes Phenyl und
der Phenylrest im Phenylcarbamoyl und/oder die für $R^2$ genannten heterocyclischen Reste gegebenenfalls durch Chlor, Brom, Fluor, Carbamoyl, N-$C_1$-$C_4$-Alkylcarbamoyl, N-Phenylcarbamoyl, $C_1$-$C_4$-Alkyl, $C_1$-$C_4$-Alkoxy, Benzoylamino, $C_1$-$C_4$-Alkanoylamino, $C_1$-$C_4$-Alkoxycarbonyl oder Phenoxycarbonyl substituiert sind, und wobei, wenn in der Komponente (a)

X 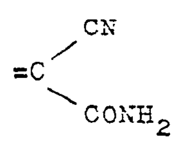 oder 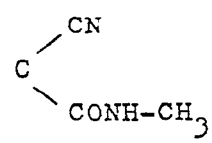

ist, $R^3$ nicht Wasserstoff sein darf, und die Pigmente entweder durch trockenes Mahlen eines Gemisches aus (I) und (II) bis die Primärteilchen $\leq 0{,}2\ \mu m$ sind und anschließendem Erwärmen des feinteiligen, agglomerierten Mahlgutes in einer organischen Flüssigkeit oder einem Gemisch aus Wasser und organischer Flüssigkeit oder durch Synthese von (I) in Gegenwart von feinteiligem (II) in wäßrigem Medium oder durch Erwärmen einer Mischung aus den feinteiligen Pigmenten (I) und (II) in wäßrigem Medium, gegebenenfalls nach vorausgegangener Einwirkung von Scherkräften erhalten werden.

2. Isoindolinpigment gemäß Anspruch 1, dadurch gekennzeichnet, daß (a) eine Isoindolinverbindung der Formel

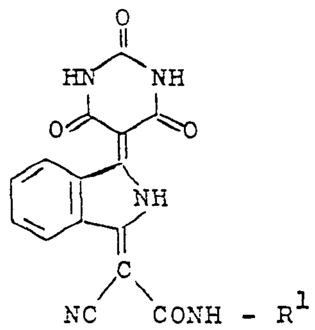

(III)

in der $R^1$ für Wasserstoff oder Methyl steht, und (B) eine Isoindolinvebindung der Formel

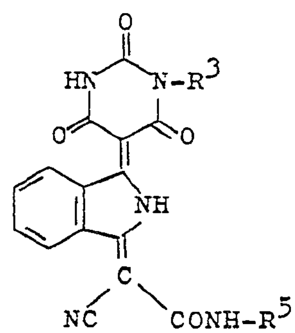

(IV)

ist, in der

$R^3$ für Wasserstoff-, $C_1$- bis $C_4$-Alkyl oder für gegebenenfalls durch Chlor, Brom, Methyl, Ethyl, Methoxy oder Ethoxy substituiertes Phenyl und

$R^5$ für Wasserstoff oder $C_1$- bis $C_4$-Alkyl stehen,

wobei wenn $R^1$ Wasserstoff ist, $R^3$ oder $R^5$ nicht Wasserstoff sein darf, oder wenn $R^1$ Methyl ist, darf $R^3$ nicht Wasserstoff sein.

3. Isoindolinpigmente gemäß Anspruch 2, dadurch gekennzeichnet, daß $R^3$ für Methyl, Ethyl oder Phenyl und $R^5$ für Methyl oder Ethyl stehen, wobei einer der Reste $R^3$ oder $R^5$ auch Wasserstoff sein kann und für den Fall, daß $R^1$ für Methyl steht, $R^3$ nicht Wasserstoff sein darf.

4. Isoindolinpigmente gemäß Anspruch 2, dadurch gekennzeichnet, daß $R^1$ für Wasserstoff, einer der Reste $R^3$ oder $R^5$ für Wasserstoff und der andere für Ethyl oder vorzugsweise für Methyl stehen.

5. Isoindolinpigmente gemäß Anspruch 2, dadurch gekennzeichnet, daß $R^1$ für Methyl, $R^3$ für Ethyl, Phenyl oder vorzugsweise für Methyl und $R^5$ für Wasserstoff stehen.

6. Isoindolinpigmente gemäß Anspruch 1, dadurch gekennzeichnet, daß (a) eine Isoindolinverbindung der Formel

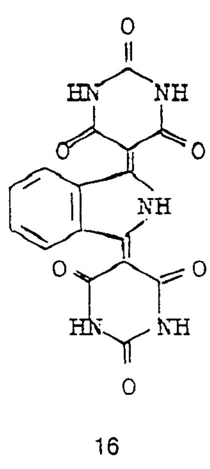

(V)

und (b) eine Isoindolinverbindung der Formel

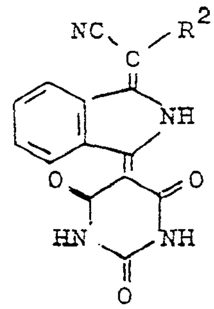

(VI)

ist, in der $R^2$ für —CN, —$CONH_2$, N—$C_1$- bis $C_4$-Alkylcarbamoyl, N-Phenylcarbamoyl, 2-Chinazolonyl, 2-Chinoxazolonyl oder 2-Benzimidazolyl und wobei der Phenylrest im Phenylcarbamoyl und/oder die für $R^2$ genannten heterocyclischen Reste gegebenenfalls durch Fluor, Chlor, Brom, Carbamoyl, N—$C_1$- bis $C_4$-Alkylcarbamoyl, N-Phenylcarbamoyl, $C_1$- bis $C_4$-Alkyl, $C_1$- bis $C_4$-Alkoxy, benzoylamino, $C_1$- bis $C_4$-Alkanoylamino, $C_1$- bis $C_4$-Alkoxycarbonyl oder Phenoxycarbonyl substituiert sind.

7. Isoindolinpigment gemäß Anspruch 6, dadurch gekennzeichnet, daß $R^2$ für —$CONH_2$, $C_1$- bis $C_4$-Alkylcarbamoyl, für gegebenenfalls durch Fluor, Chlor, Brom, Methyl, Ethyl, Methoxy, Ethoxy, Carbomethoxy, Acetylamino, Carbamoyl oder Benzoylamino substituiertes N-Phenylcarbamoyl oder 2-Chinazolyl stehen.

8. Isoindolinpigment gemäß Anspruch 6, dadurch gekennzeichnet, daß $R^2$ für Carbamoyl, N-Methylcarbamoyl oder gegebenenfalls durch Fluor, Chlor, Brom, Methyl und/oder Methoxy substituiertes N-Phenylcarbamoyl steht.

9. Verfahren zur Herstellung von farbstarken Isoindolinpigmenten gemäß den Ansprüchen 2 bis 8 durch eine Wärmebehandlung der Rohpigmente, dadurch gekennzeichnet, daß man ein Gemisch aus Isoindolinverbindungen der Formeln

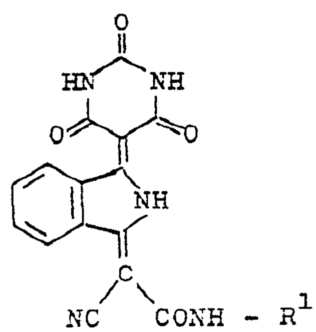

(III)

und

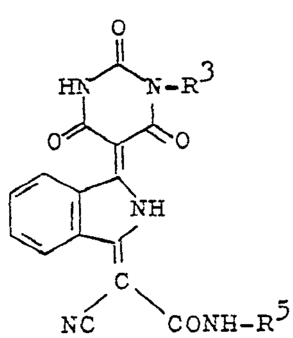

(IV)

oder ein Gemisch aus Isoindolinverbindungen der Formeln

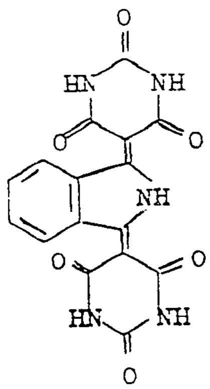

(V)

und

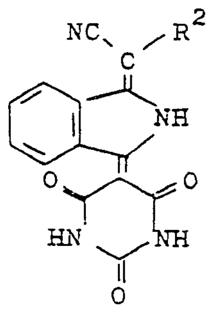

(VI)

trocken mahlt bis die Primärteilchen eine Größe von $\leqslant 0{,}2\ \mu m$ aufweisen, und das Mahlgut, das aus Primärteilchen aufgebauten Agglomeraten von 2 bis $> 200\ \mu m$ besteht, in einer organischer Flüssigkeit oder in einem Gemisch aus organischer Flüssigkeit und Wasser auf Temperaturen von 50 bis 200 °C erwärmt und das Pigment isoliert.

10. Verfahren gemäß Anspruch 9, dadurch gekennzeichnet, daß man als organische Flüssigkeit N,N-Bis-$C_1$- bis -$C_4$-alkylamide von $C_1$- bis $C_4$-Alkansäuren, N-Methylpyrrolidon oder Phenole verwendet.

11. Verfahren gemäß Anspruch 9, dadurch gekennzeichnet, daß man als organische Flüssigkeit Phenol verwendet.

12. Isoindolinpigmente gemäß Anspruch 1, dadurch gekennzeichnet, daß

(a) eine Isoindolinverbindung der Formel

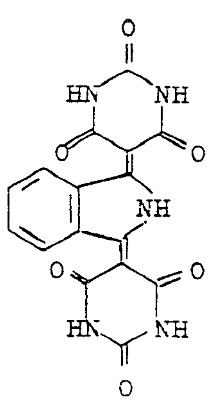

(V)

und

(b) mindestens eines Isoindolinverbindung der Formel

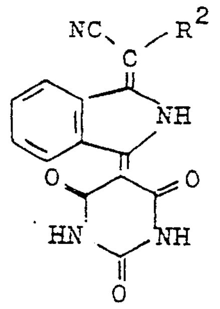

(VI)

ist, in der $R^2$ für —CN, —$CONH_2$, N—$C_1$- bis $C_4$-Alkylcarbamoyl, N-Phenylcarbamoyl, 2-Chinazolonyl, 2-Chinoxazolonyl oder 2-Benzimidazolyl steht und der Phenylrest im Phenylcarbamoyl und/oder die für $R^2$ genannten heterocyclischen Reste gegebenenfalls durch Chlor, Brom, Fluor, Carbamoyl, N—$C_1$-$C_4$-Alkylcarbamoyl, N-Phenylcarbamoyl, $C_1$-$C_4$-Alkyl, $C_1$-$C_4$-Alkoxy, Benzoylamino, $C_1$-$C_4$-Alkanoylamino, $C_1$-$C_4$-Alkoxycarbonyl oder Phenoxycarbonyl substituiert sind, und wobei die Pigmente entweder durch Synthese von (V) in Gegenwart von feinteiligem (VI) in wäßrigem Medium oder durch Erwässen einer Mischung aus den feinteiligen Pigmenten (V) und (VI) in wäßrigem Medium, gegebenenfalls nach vorausgegangener Einwirkung von Scherkräften erhalten werden.

13. Isoindolinpigmente gemäß Anspruch 12, dadurch gekennzeichnet, daß als (b) Isoindolinpigmente der Formel (VI) verwendet werden, in der $R^2$ für —$CONH_2$, N—$C_1$- bis $C_4$-Alkylcarbamoyl, gegebenenfalls durch Chlor substituiertes Phenylcarbamoyl oder 2-Chinazolonyl steht.

14. Isoindolinpigmente gemäß Anspruch 12, dadurch gekennzeichnet, daß als (b) Isoindolinpigmente der Formel (VI) verwendet werden, in der $R^2$ für —$CONH_2$, —CONH—$CH_3$, N-(4-Chlorphenyl)-carbamoyl, N-(3-Chlorphenyl-carbamoyl oder 2-Chinazolonyl steht.

15. Isoindolinpigmente gemäß den Ansprüchen 12, 13 oder 14, dadurch gekennzeichnet, daß diese 10 bis 20 Gew.% (b), bezogen auf (a), enthalten.

16. Verfahren zur Herstellung von farbstarken, lasierenden Isoindolinpigmenten gemäß den Ansprüchen 12, 13, 14 oder 15 durch eine Wärmebehandlung in wäßrigem Medium, gegebenenfalls nach vorhergegangener Einwirkung von Scherkräften, dadurch gekennzeichnet, daß man entweder ein Gemisch aus

(a) der feinteiligen Verbindung der Formel

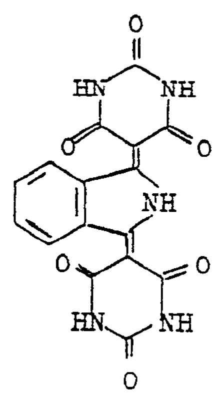

(V)

und

(b) mindestens einer Isoindolinverbindung der Formel

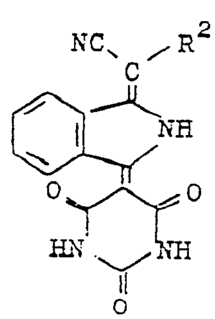

(VI)

in der $R^2$ die in den Ansprüchen 12, 13 oder 14 angegebene Bedeutung hat, in wäßrigem Medium erwärmt oder (V) in Gegenwart von feinteiligem (VI) in wäßrigem Medium synthetisiert.

17. Verfahren gemäß Anspruch 16, dadurch gekennzeichnet, daß man das Gemisch aus (a) und (b) in Wasser auf Temperaturen von 70° bis 150 °C erwärmt.

18. Verwendung der Isoindolinpigmente gemäß den Ansprüchen 1 bis 8 und 12 bis 15 zum Pigmentieren von Druckfarben, Lacken oder Kunststoffen in der Masse.

**Claims**

1. An isoindoline pigment having high color strength and containing

(a) a compound of the formula

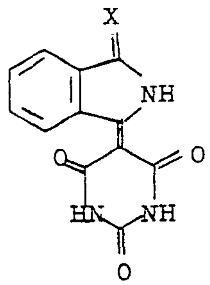

(I)

where

X is

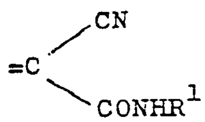

or

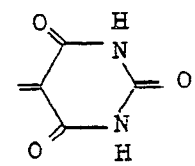

and

$R^1$ is hydrogen or methyl, and

(b) from 2 to 50 % by weight, based on (a), of one or more isoindoline compounds of the formula

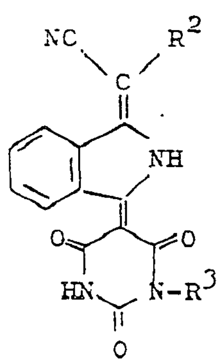

(II)

where

$R^2$ is —CN, —$CONH_2$, N—$C_1$-$C_4$-alkylcarbamyl, N-phenylcarbamyl, 2-quinazolonyl, 2-quinoxazolonyl or 2-benzimidazolyl,

$R^3$ is hydrogen or $C_1$-$C_4$-alkyl or is phenyl which is unsubstituted or substituted by chlorine, bromine, methyl, ethyl, methoxy or ethoxy, and the phenyl radical in the phenylcarbamyl and/or the heterocyclic radicals specified for $R^2$ are unsubstituted or substituted by chlorine, fluorine, bromine, carbamyl, N—$C_1$-$C_4$-alkylcarbamyl, N-phenylcarbamyl, $C_1$-$C_4$-alkyl, $C_1$-$C_4$-alkoxy, benzoylamino, $C_1$-$C_4$-alkanoylamino, $C_1$-$C_4$-alkoxycarbonyl or phenoxycarbonyl, and when X in component (a) is

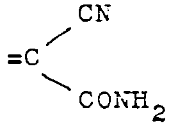

or

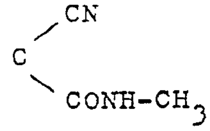

$R^3$ cannot be hydrogen, the pigment being obtained either by dry-milling a mixture of (I) and (II) until the primary particles are $\leq 0.2\ \mu m$, and then heating the finely divided agglomerated ground material in an organic liquid or in a mixture of water and an organic liquid, or by synthesis of (I) in the presence of finely divided (II) in aqueous medium, or by heating a mixture of the finely divided pigments (I) and (II) in aqueous medium after having optionally subjected it beforehand to the action of shearing forces.

2. An isoindoline pigment as claimed in claim 1, wherein (a) is an isoindoline compound of the formula

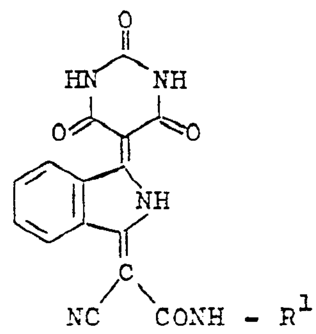

(III)

where $R^1$ is hydrogen or methyl, and (b) is an isoindoline compound of the formula

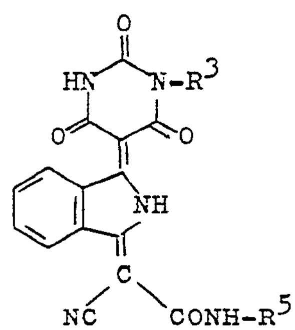

(IV)

where

$R^3$ is hydrogen or $C_1$-$C_4$-alkyl or is phenyl which is unsubstituted or substituted by chlorine, bromine, methyl, ethyl, methoxy or ethoxy, and

$R^5$ is hydrogen or $C_1$-$C_4$-alkyl,

and when $R^1$ is hydrogen, $R^3$ or $R^5$ cannot be hydrogen, or when $R^1$ is methyl, $R^3$ cannot be hydrogen.

3. An isoindoline pigment as claimed in claim 2, wherein $R^3$ is methyl, ethyl or phenyl and $R^5$ is methyl or ethyl, and one of the radicals $R^3$ and $R^5$ may furthermore be hydrogen, and if $R^1$ is methyl, $R^3$ cannot be hydrogen.

4. An isoindoline pigment as claimed in claim 2, wherein $R^1$ is hydrogen, one of the radicals $R^3$ and $R^5$ is hydrogen and the other is ethyl or, preferably, methyl.

5. An isoindoline pigment as claimed in claim 2, wherein $R^1$ is methyl, $R^3$ is ethyl, phenyl or, preferably, methyl, and $R^5$ is hydrogen.

6. An isoindoline pigment containing (a) an isoindoline compound of the formula

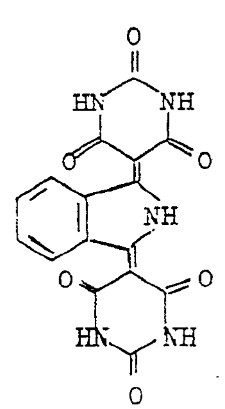

(V)

and (b) an isoindoline compound of the formula

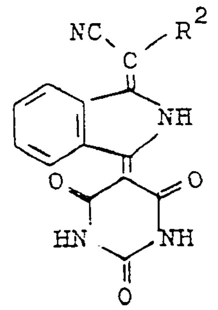

(VI)

where $R^2$ is —CN, —$CONH_2$, N—$C_1$-$C_4$-alkylcarbamyl, N-phenylcarbamyl, 2-quinazolonyl, 2-quinoxazolonyl or 2-benzimidazolyl, and the phenyl radical in the phenylcarbamyl and/or the heterocyclic radicals specified for $R^2$ are unsubstituted or substituted by fluorine, chlorine, bromine, carbamyl, N—$C_1$-$C_4$-alkylcarbamyl, N-phenylcarbamyl, $C_1$-$C_4$-alkyl, $C_1$-$C_4$-alkoxy, benzoylamino, $C_1$-$C_4$-alkanoylamino, $C_1$-$C_4$-alkoxycarbonyl or phenoxycarbonyl.

7. An isoindoline pigment as claimed in claim 6, wherein $R^2$ is —$CONH_2$ or $C_1$-$C_4$-alkylcarbamyl, or is N-phenylcarbamyl which is unsubstituted or substituted by fluorine, chlorine, bromine, methyl, ethyl, methoxy, ethoxy, carbomethoxy, acetylamino, carbamyl or benzoylamino, or is 2-quinazolyl.

8. An isoindoline pigment as claimed in claim 6, wherein $R^2$ is carbamyl or N-methylcarbamyl or is N-phenylcarbamyl which is unsubstituted or substituted by fluorine, chlorine, bromine, methyl and/or methoxy.

9. A process for the preparation of an isoindoline pigment having high color strength as claimed in claims 2 to 8 by subjecting the crude pigments to a heat treatment, wherein a mixture of isoindoline compounds of the formulae

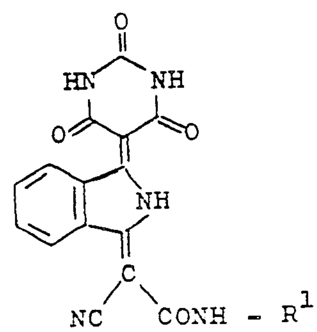

(III)

and

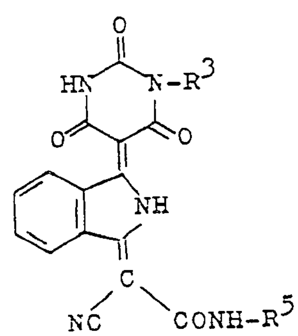

(IV)

or a mixture of isoindoline compounds of the formulae

(See formulae page 23)

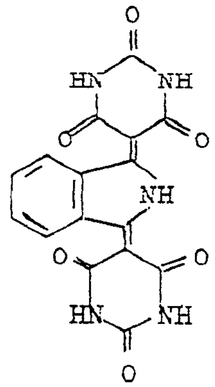

(V)

and

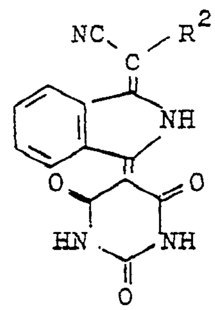

(VI)

is dry-milled until the primary particles have a size of ≤ 0.2 µm, and the ground material consisting of agglomerates which are from 2 to > 200 µm in size and are composed of primary particles is heated in an organic liquid or in a mixture of an organic liquid and water to a temperature of from 50 to 200 °C, and the pigment is isolated.

10. A process as claimed in claim 9, wherein the organic liquid used in an N,N-bis-$C_1$-$C_4$-alkylamide of a $C_1$-$C_4$-alkanoic acid, or N-methylpyrrolidone or a phenol.

11. A process as claimed in claim 9, wherein the organic liquid used is phenol.

12. An isoindoline pigment as claimed in claim 1, wherein

(a) an isoindoline compound of the formula

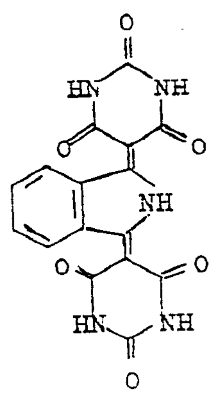

(V)

and

(b) at least one isoindoline compound of the formula

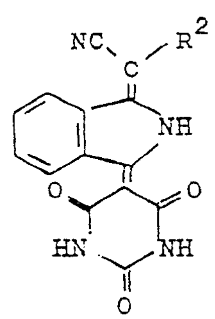

(VI)

where $R^2$ is —CN, —$CONH_2$, N—$C_1$-$C_4$-alkylcarbamyl, N-phenylcarbamyl, 2-quinazolonyl, 2-quinoxazolonyl or 2-benzimidazolyl, and the phenyl radical in the phenylcarbamyl and/or the heterocyclic radicals specified for $R^2$ are unsubstituted or substituted by chlorine, fluorine, bromine, carbamyl, N—$C_1$-$C_4$-alkylcarbamyl, N-phenylcarbamyl, $C_1$-$C_4$-alkyl, $C_1$-$C_4$-alkoxy, benzoylamino, $C_1$-$C_4$-alkanoylamino, $C_1$-$C_4$-alkoxycarbonyl or phenoxycarbonyl, the pigment being obtained either by synthesis of (V) in the presence of finely divided (VI) in aqueous medium, or by heating a mixture of the finely divided pigments (V) and (VI) in aqueous medium after having optionally subjected it beforehand to the action of shearing forces.

13. An isoindoline pigment as claimed in claim 12, wherein an isoindoline pigment of the formula VI, where $R^2$ is —$CONH_2$, N—$C_1$-$C_4$-alkylcarbamyl, phenylcarbamyl which is unsubstituted or substituted by chlorine, or 2-quinazolyl, is used as (b).

14. An isoindoline pigment as claimed in claim 12, wherein an isoindoline pigment of the formula VI, where $R^2$ is —$CONH_2$, —CONH—$CH_3$, N-(4-chlorophenyl)-carbamyl, N-(3-chlorophenyl)-carbamyl or 2-quinazolyl, is used as (b).

15. An isoindoline pigment as claimed in claim 12, 13 or 14, which contains from 10 to 20 % by weight, based on (a), of (b).

16. A process for the preparation of a transparent isoindoline pigment having high color strength as claimed in claim 12, 13, 14 or 15 by effecting heating in aqueous medium after optional prior exposure to shearing forces, wherein either a mixture of

(a) a finely divided compound of the formula

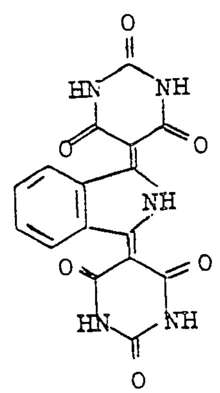

(V)

and

(b) at least one isoindoline compound of the formula

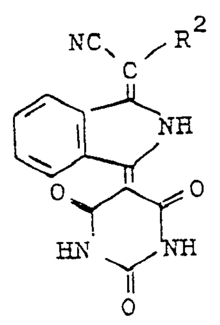

(VI)

where $R^2$ has the meanings given in claim 12, 13 or 14, is heated in aqueous medium, or (V) is synthesized in the presence of finely divided (VI) in aqueous medium.

17. A process as claimed in claim 16, wherein the mixture of (a) and (b) is heated in water to a temperature of from 70 to 150 °C.

18. The use of an isoindoline pigment as claimed in claims 1 to 8 and 12 to 15 for coloring printing inks and surface coatings, and mass coloring plastics.

**Revendications**

1. Pigments d'isoindoline à fort pouvoir colorant, contenant

(a) un composé de formule

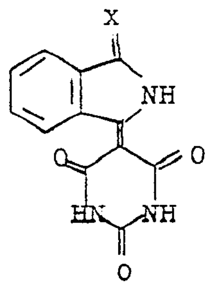

(I)

dans laquelle

X est mis pour

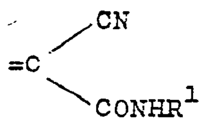

ou

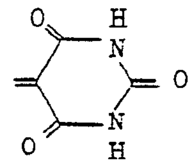

et

$R^1$ est mis pour hydrogène ou méthyle, et

(b) 2 à 50 % en poids, rapportés à (a), d'au moins un composé d'isoindoline de formule

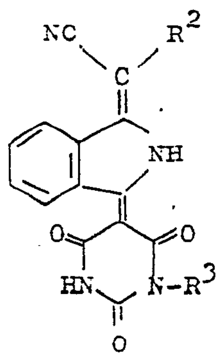

(II)

dans laquelle

$R^2$ est mis pour —CN, —$CONH_2$, N-alkylcarbamoyle en $C_1$ à $C_4$, N-phénylcarbamoyle, 2-quinazolonyle, 2-quinoxazolonyle ou 2-benzimidazolyle,

$R^3$ pour hydrogène, alkyle en $C_1$ à $C_4$ ou pour phényle éventuellement substitué par chlore, brome, méthyle, éthyle, méthoxy ou éthoxy, et

le reste phényle dans phénylcarbamoyle et/ou les restes hétérocycliques indiqués pour $R^2$ sont éventuellement substitués par chlore, brome, fluor, carbamoyle, N-alkylcarbamoyle en $C_1$-$C_4$, N-phénylcarbamoyle, alkyle en $C_1$-$C_4$, alcoxy en $C_1$-$C_4$, benzoylamino, alcanoylamino en $C_1$-$C_4$, alcoxycarbonyle en $C_1$-$C_4$ ou phénoxycarbonyle, et où, lorsque X dans les composants (a) est

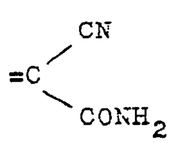

ou

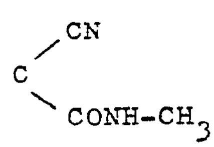

$R^3$ ne doit pas être hydrogène, et les pigments sont obtenus, soit par broyage à sec d'un mélange de (I) et (II) jusqu'à ce que les particules primaires soient ≤ 0,2 μm et puis chauffage du produit broyé aggloméré, finement divisé, dans un liquide organique ou un mélange d'eau et de liquide organique, soit par synthèse de (I) en présence de (II) finement divisé, dans un milieu aqueux, soit par chauffage d'un mélange des pigments (I) et (II) finement divisés, dans un milieu aqueux, éventuellement après action préalable de forces de cisaillement.

2. Pigments d'isoindoline selon la revendication 1, caractérisés par le fait que (a) est un composé d'isoindoline de formule

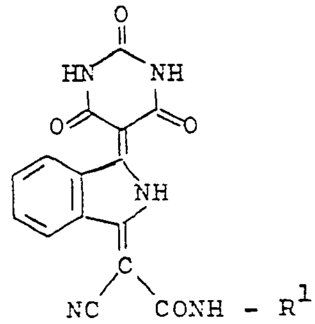

(III)

dans laquelle $R^1$ représente hydrogène ou méthyle et (b) est un composé d'isoindoline de formule

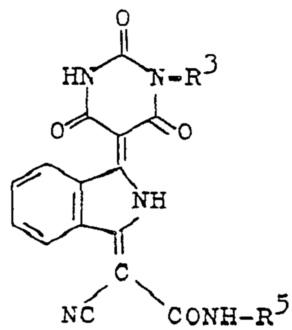

(IV)

dans laquelle

$R^3$ est mis pour hydrogène, alkyle en $C_1$ à $C_4$ ou pour phényle éventuellement substitué par chlore, brome, méthyle, éthyle, méthoxy ou éthoxy, et

$R^5$ représente hydrogène ou alkyle en $C_1$ à $C_4$,

$R^3$ ou $R^5$ ne devant pas être hydrogène lorsque $R^1$ est hydrogène, ou bien $R^3$ ne devant pas être hydrogène lorsque $R^1$ est méthyle.

3. Pigments d'isoindoline selon la revendication 2, caractérisés par le fait que $R^3$ est mis pour méthyle, éthyle ou phényle et $R^5$ pour méthyle ou éthyle, un des restes $R^3$ ou $R^5$ pouvant être aussi hydrogène et, dans le cas où $R^1$ représente méthyle, $R^3$ ne devant pas être hydrogène.

4. Pigments d'isoindoline selon la revendication 2, caractérisés par le fait que $R^1$ est mis pour hydrogène, un des restes $R^3$ ou $R^5$ est mis pour hydrogène et l'autre pour éthyle ou, de préférence, pour méthyle.

5. Pigments d'isoindoline selon la revendication 2, caractérisés par le fait que $R^1$ est mis pour méthyle, $R^3$ pour éthyle, phényle ou, de préférence, pour méthyle et $R^5$ pour hydrogène.

6. Pigments d'isoindoline selon la revendication 1, caractérisés par le fait que (a) est un composé d'isoindoline de formule

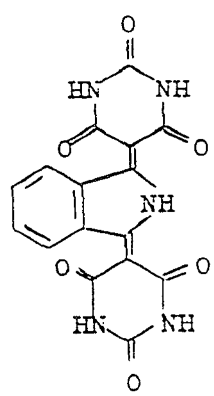

(V)

et (b) un composé d'isoindoline de formule

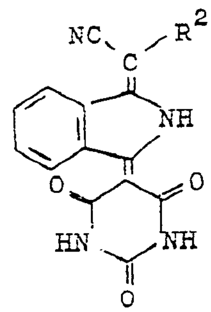

(VI)

dans laquelle $R^2$ est mis pour —CN, —$CONH_2$, N-alkylcarbamoyle en $C_1$ à $C_4$, N-phénylcarbamoyle, 2-quinazolonyle, 2-quinoxazolonyle ou 2-benzimidazolyle et le reste phényle dans phénylcarbamoyle et/ou les restes hétérocycliques indiqués pour $R^2$ étant éventuellement substitués par chlore, brome, fluor, carbamoyle, N-alkylcarbamoyle en $C_1$-$C_4$, N-phénylcarbamoyle, alkyle en $C_1$-$C_4$, alcoxy en $C_1$-$C_4$, benzoylamino, alcanoylamino en $C_1$-$C_4$, alcoxycarbonyle en $C_1$-$C_4$ ou phénoxycarbonyle.

7. Pigments d'isoindoline selon la revendication 6, caractérisés par le fait que $R^2$ est mis pour —$CONH_2$, alkylcarbamoyle en $C_1$ à $C_4$, pour N-phénylcarbamoyle éventuellement substitué par fluor, chlore, brome, méthyle, éthyle, méthoxy, éthoxy, carbométhoxy, acétylamino, carbamoyle ou benzoylamino, ou 2-quinazolonyle.

8. Pigments d'isoindoline selon la revendication 6, caractérisés par le fait que $R^2$ est mis pour carbamoyle, N-méthylcarbamoyle ou N-phénylcarbamoyle éventuellement substitué par fluor, chlore, brome, méthyle et/ou méthoxy.

9. Procédé de préparation de pigments d'isoindoline à fort pouvoir colorant, selon les revendications 2 à 8, par traitement à chaud des pigments bruts, caractérisés par le fait que l'on broie à sec un mélange de composés d'isoindoline de formules

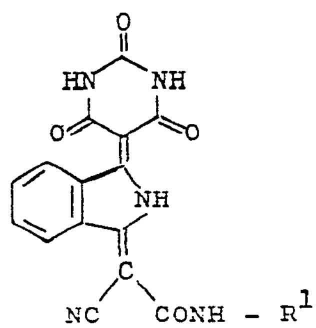

(III)

et

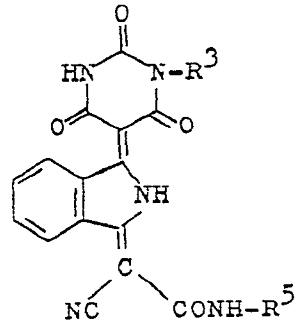

(IV)

ou un mélange de composés d'isoindoline de formules

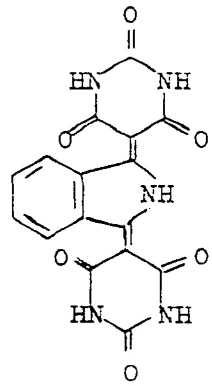

(V)

et

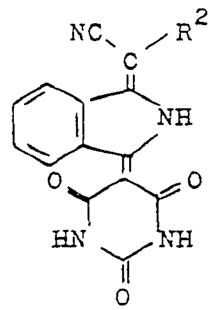

(VI)

jusqu'à ce que les particules primaires possèdent une grosseur ≤ 0,2 µm et on chauffe à des températures de 50 à 200 °C, dans un liquide organique ou dans un mélange de liquide organique et d'eau, le produit broyé, constitué d'agglomérats formés par les particules primaires de 2 à 200 µm, puis on isole le pigment.

10. Procédé selon la revendication 9, caractérisé par le fait que l'on utilise, comme liquide organique, des N,N-bis-alkylamides en $C_1$ à $C_4$ d'acides alcaniques en $C_1$ à $C_4$, de la N-méthylpyrrolidone ou des phénols.

11. Procédé selon la revendication 9, caractérisé par le fait que l'on utilise, comme liquide organique, du phénol.

12. Pigments d'isoindoline selon la revendication 1, caractérisés par le fait que

(a) est un composé d'isoindoline de formule

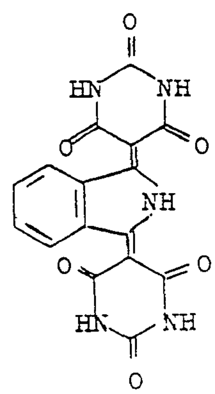

(V)

et

(b) un composé d'isoindoline de formule

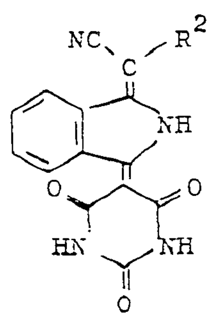

(VI)

dans laquelle $R^2$ est mis pour —CN, —$CONH_2$, N-alkylcarbamoyle en $C_1$ à $C_4$, N-phénylcarbamoyle, 2-quinazolonyle, 2-quinoxazolonyle ou 2-benzimidazolyle, le reste phényle dans phénylcarbamoyle et/ou les restes hétérocycliques indiqués pour $R^2$ sont éventuellement substitués par chlore, brome, fluor, carbamoyle, N-alkylcarbamoyle en $C_1$-$C_4$, N-phénylcarbamoyle, alkyle en $C_1$-$C_4$, alcoxy en $C_1$-$C_4$, benzoylamino, alcanoylamino en $C_1$-$C_4$, alcoxycarbonyle en $C_1$-$C_4$ ou phénoxycarbonyle, les pigments étant obtenus par synthèse de (V) en présence de (VI) finement divisé, dans un milieu aqueux, ou par chauffage d'un mélange des pigments (V) et (VI) finement divisés, dans un milieu aqueux, éventuellement après action préalable de forces de cisaillement.

13. Pigments d'isoindoline selon la revendication 12, caractérisés par le fait que l'on utilise, comme (b), des pigments d'isoindoline de formule VI, dans laquelle $R^2$ est mis pour —$CONH_2$, N-alkylcarbamoyle en $C_1$ à $C_4$, phénylcarbamoyle éventuellement substitué par du chlore ou 2-quinazolonyle.

14. Pigments d'isoindoline selon la revendication 12, caractérisés par le fait que l'on utilise, comme (b), des pigments d'isoindoline de formule (VI), dans laquelle $R^2$ est mis pour —$CONH_2$, —CONH—$CH_3$, N-(4-chlorophényl)-carbamoyle, N-(3-chlorophényl)-carbamoyle ou 2-quinazolonyle.

15. Pigments d'isoindoline selon les revendications 12, 13 ou 14, caractérisés par le fait que ceux-ci contiennent 10 à 20 % en poids de (b), par rapport à (a).

16. Procédé de préparation de pigments d'isoindoline transparents, à fort pouvoir colorant, selon les revendications 12, 13, 14 ou 15, par traitement à chaud en milieu aqueux, éventuellement après action préalable de forces de cisaillement, caractérisé par le fait que, soit on chauffe en milieu aqueux, un mélange de

(a) le composé finement divisé de formule

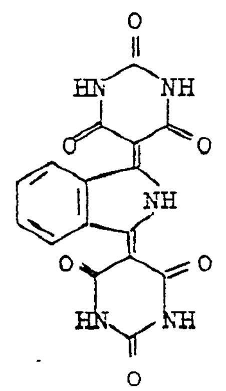

(V)

et

(b) au moins un composé d'isoindoline de formule

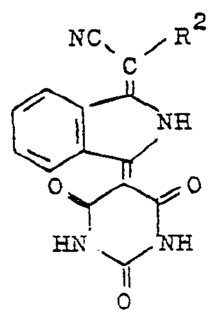

(VI)

dans laquelle $R^2$ a les significations données dans les revendications 12, 13, 14, soit on synthétise (V) en milieu aqueux, en présence de (VI) finement divisé.

17. Procédé selon la revendication 16, caractérisé par le fait que l'on chauffe le mélange de (a) et (b) dans l'eau à des températures de 70° à 150 °C.

18. Utilisation des pigments d'isoindoline selon les revendications 1 à 8 et 12 à 15 pour pigmenter des encres d'impression, des laques ou des matières plastiques, dans la masse.